Europäisches Patentamt

European Patent Office

Office européen des brevets

(11) Veröffentlichungsnummer: **0 328 743 B1**

# EUROPÄISCHE PATENTSCHRIFT

(45) Veröffentlichungstag der Patentschrift: **04.11.92**

(51) Int. Cl.⁵: **H02J 13/00**

(21) Anmeldenummer: **88118775.1**

(22) Anmeldetag: **11.11.88**

(54) **Schaltungsanordnung zur selektiven Einschaltung verschiedener elektrischer Geräte, insbesondere von Autoradios zu Vorführzwecken.**

(30) Priorität: **18.02.88 DE 3805013**

(43) Veröffentlichungstag der Anmeldung:
**23.08.89 Patentblatt 89/34**

(45) Bekanntmachung des Hinweises auf die
Patenterteilung:
**04.11.92 Patentblatt 92/45**

(84) Benannte Vertragsstaaten:
**AT CH DE FR GB LI SE**

(56) Entgegenhaltungen:
**DE-B- 1 276 166**

(73) Patentinhaber: **Gelhard Holding AG**
**Ebnetrain 2**
**CH-6045 Meggen(CH)**

(72) Erfinder: **Eickelmann, Lothar**
**Rapunzelweg 7**
**W-4600 Dortmund 16(DE)**

(74) Vertreter: **Leine, Sigurd, Dipl.-Ing. et al**
**LEINE & KÖNIG Patentanwälte Burckhardt-**
**strasse 1**
**W-3000 Hannover 1(DE)**

## Beschreibung

Die Erfindung betrifft eine Schaltungsanordnung der im Oberbegriff des Anspruchs 1 genannten Art zur selektiven Einschaltung verschiedener elektrischer Geräte, insbesondere von Autoradios zu Vorführzwecken.

Zur Vorführung verschiedener Autoradios ist es bekannt, ihre Ein- und Ausschaltung von einem gemeinsamen Steuerpult aus vorzunehmen, in dem Schalter angeordnet sind. Dieses Steuerpult wird kompliziert, wenn die Schaltung nicht nur der Versorgungsanschlüsse erfolgt, sondern auch die Anschaltung von Antennen, Boostern, Zusatzverstärkern, Lautsprechern und dergleichen. Dabei besteht eine besondere Schwierigkeit darin, daß die zu schaltenden Leitungen alle bis zum Steuerpult geführt werden müssen. Eine weitere Schwierigkeit besteht darin, daß Maßnahmen getroffen werden müssen, um das gleichzeitige Einschalten mehrerer Geräte oder Zusatzgeräte zu verhindern. Zwar sind für derartige Zwecke mechanische Tastschalterleisten bekannt, die sich gegenseitig auslösen, so daß bei Betätigung eines neuen Tasters ein vorher gedrückter Taster entriegelt und damit zurückgestellt wird, jedoch sind diese aufwendig.

Der Erfindung liegt die Aufgabe zugrunde, eine Schaltungsanordnung der betreffenden Art zu schaffen, mit der beliebig viele Geräte selektiv einschaltbar sind, so daß beim Einschalten eines neuen Gerätes das bisher eingeschaltete Gerät automatisch ausgeschaltet wird, ohne daß mechanische Tastschalterleisten und lange Leitungen erforderlich sind.

Die der Erfindung zugrundeliegende Aufgabe wird durch die im Kennzeichen des Anspruchs 1 angegebene Lehre gelöst.

Der Grundgedanke dieser Lehre besteht darin, die Einschaltung der verschiedenen Geräte durch selbsthaltende Relais vorzunehmen, die durch jeweils einen Tastschalter in die Selbsthaltelage gebracht werden können, wobei jedoch Maßnahmen getroffen sind, durch die während einer durch die Schaltung bestimmten Zeit die Stromversorgung für sämtliche Relais kurzzeitig unterbrochen wird, um sämtliche Relais zum Abfallen zu bringen. Bei der nachfolgenden, selbsttätigen Wiedereinschaltung der Stromversorgung ist der für das neue Gerät gedrückte Taster noch gedrückt, und über diese Verbindung erhält das Relais für das neu einzuschaltende Gerät Strom, so daß es in den selbsthaltenden Zustand gelangt und in diesem verbleibt, da die Stromversorgung wieder bleibend eingeschaltet ist.

Für die Einschaltung der verschiedenen Geräte sind also jeweils nur einfache Tastschalter erforderlich, die keine gegenseitige, mechanische Verriegelung haben. Die Verriegelung ist elektrisch. Tastschalter können an beliebigen Orten ohne größeren Leitungsaufwand angeordnet werden. Die Relais für die einzuschaltenden Geräte können sich unmittelbar an diesen Geräten befinden, so daß die Leitungen beispielsweise für Antenne, Lautsprecher usw. sehr kurz sein können.

Die Ruhekontakte der Tastschalter sind zweckmäßigerweise in Reihe geschaltet. Ebenso können auch die Ruhekontakte der Relais in Reihe geschaltet sein.

Die Lehre des Anspruchs 4 betrifft eine besonders zweckmäßige Ausführungsform der Schaltungsanordnung zur Erzeugung des elektrischen Steuersignales zur kurzzeitigen Abschaltung der Stromversorgung. Es wird eine von dem Strom durch den Widerstand, der mit den Tastschaltern in Reihe geschaltet ist, abhängige Spannung abgegriffen, in einem ersten Transistor verstärkt, einem Differenzierglied, bestehend aus einem Kondensator und einem Widerstand, zugeführt. Das differenzierte Signal wird dann in einem zweiten Transistor verstärkt, der das Umschaltrelais steuert, das die kurzzeitige Abschaltung der Stromversorgung bewirkt.

Die Lehre des Anspruchs 5 stellt eine zweckmäßige Ausführungsform der Schaltungsanordnung dar, um zu bewirken, daß dem noch gedrückten Tasterschalter nach Wiedereinschalten der Spannungsversorgung Spannung zugeführt wird, um das zugehörige Relais zu erregen und damit in den Selbsthaltezustand zu bringen.

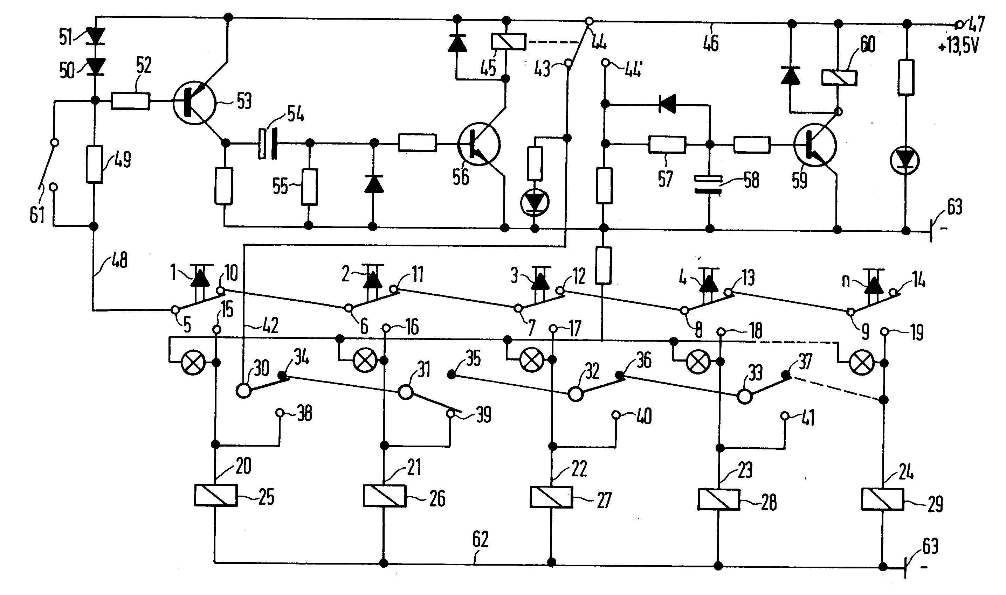

Anhand einer in der Zeichnung dargestellten Schaltungsanordnung soll die Erfindung an einem Ausführungsbeispiel näher erläutert werden.

Es sind Tastschalter, 1, 2, 3, 4 ...n vorgesehen, deren Arbeitskontakte 5, 6, 7, 8, 9 und Ruhekontakte 10, 11, 12, 13, 14 in Reihe geschaltet sind, während Arbeitskontakte 15, 16, 17, 18, 19 jeweils mit ersten Anschlüssen 20, 21, 22, 23, 24 von Relaiswicklungen 25, 26, 27, 28 und 29 verbunden sind.

Den Relais 25-29 sind jeweils Umschalter mit Umschaltkontakten 30, 31, 32 und 33, Ruhekontakten 34, 35, 36, 37 und Arbeitskontakten 38, 39, 40, 41 zugeordnet, die mit den jeweiligen ersten Anschlüssen 20, 21, 22, 23 der Relaiswicklungen 25-28 verbunden sind.

Die Ruhekontakte 34-37 sind mit den benachbarten Umschaltkontakten 31, 32, 33 verbunden, so daß in Ruhelage sämtlicher Umschaltkontakte 30-33 diese in Reihe geschaltet sind. Der Umschaltkontakt 30 ist dabei über eine Leitung 42 mit einem Ruhekontakt 43 und einen Umschaltkontakt 44, die einem Relais mit einer Relaiswicklung 45 zugeordnet sind, und über eine Leitung 46 mit einem ersten, positiven Pol 47 einer Gleichspannungsquelle verbunden. Die Relaiswicklungen 25-29 sind über eine Leitung 62 mit einem zweiten, negativen Pol 63 der Gleichspannungsquelle verbunden.

In der dargestellten Schaltlage ist die Relaiswicklung 26 eingeschaltet, das Relais hält sich über Ruhekontakt 39 und Umschaltkontakt 31, der über Ruhekontakt 34, Umschaltkontakt 30, Leitung 42, Ruhekontakt 43, Umschaltkontakt 44 und Leitung 46 mit dem positiven, ersten Pol der Gleichspannungsquelle verbunden ist.

Der Umschaltkontakt 5 des Tastschalters 1 ist über eine Leitung 48, einen Widerstand 49 und zwei Dioden 50 und 51 mit der Leitung 46 verbunden, die zu dem ersten, positiven Pol der Gleichspannungsquelle führt. Der Verbindungspunkt zwischen Widerstand 49 und Diode 50 ist über einen Widerstand 52 mit der Basis eines ersten Transistors 53 verbunden, dessen Emitter mit der Leitung 46 und dessen Kollektor über einen Kondensator 54, der zusammen mit einem Widerstand 55 ein Differenzierglied bildet, mit der Basis eines zweiten Transistors 56 verbunden ist, in dessen Emitter-Leitung die Relaiswicklung 45 liegt.

Der der Relaiswicklung 45 zugeordnete Arbeitskontakt 44 ist über ein RC-Glied, bestehend aus einem Widerstand 57 und einem Kondensator 58, mit der Basis eines dritten Transistors 59 verbunden, in dessen Emitter-Leitung eine Relaiswicklung 60 eines durch das RC-Glied 57, 58 abfallverzögerten Relais liegt, das einen Arbeitskontakt 61 aufweist, der dem Widerstand 49 parallel geschaltet ist.

Wie bereits erwähnt, ist in der dargestellten Schaltlage das der Relaiswicklung 26 zugeordnete Relais angezogen und somit das zugehörige elektrische Gerät eingeschaltet. Soll nun, ausgehend von dieser Schaltlage, das der Relaiswicklung 27 zugeordnete elektrische Gerät eingeschaltet werden, so wird der Tastschalter 3 gedrückt, so daß dessen Umschaltkontakt 7 von dem Ruhekontakt 12 abhebt und mit dem Arbeitskontakt 17 verbunden wird. Dadurch ist ein Stromkreis geschlossen, der von dem mit dem zweiten Pol 63 der Gleichspannungsquelle über die Leitung 62, Relaiswicklung 27, Arbeitskontakt 17, Umschaltkontakt 7, Ruhekontakt 11, Arbeitskontakt 6, Ruhekontakt 10, Arbeitskontakt 5, Leitung 48, Widerstand 49, Dioden 50, 51 und Leitung 46 zu dem ersten, positiven Pol 47 der Gleichspannungsquelle führt. Der Widerstand 49 ist so groß bemessen, daß der in dem genannten Stromkreis fließende Strom geringer ist als der zum Anziehen des Relais mit der Relaiswicklung 27 erforderliche Anzugstrom, so daß dieses Relais noch nicht anzieht. Der fließende Strom führt jedoch in den Dioden 50, 51 zu einem Spannungsabfall, der den ersten Transistor 53 ansteuert, so daß sich die Spannung an seinem Kollektor und damit an dem Kondensator 54 ändert. Diese Spannungsänderung wird in dem aus dem Kondensator 54 und Widerstand 55 gebildeten CR-Glied differenziert, und der so entstehende Spannungsimpuls gelangt, verstärkt über den zweiten Transistor 56, an die Relaiswicklung 45, so daß das entsprechende Relais anzieht und der Umschaltkontakt 44 von dem Ruhekontakt 43 abhebt. Dadurch wird die Stromzuführung von dem ersten Pol 47 der Gleichspannungsquelle über die Leitung 42, Umschaltkontakt 30, Ruhekontakt 34, Umschaltkontakt 31 und den selbsthaltenden Arbeitskontakt 39 zu der Relaiswicklung 26 unterbrochen, so daß dieses Relais 26 abfällt und der Umschaltkontakt 31 mit dem Ruhekontakt 35 in Berührung kommt.

Beim Abheben des Umschaltkontaktes 44 durch Anziehen des zugehörigen Relais gelangt der Umschaltkontakt 44 mit dem Arbeitskontakt 44′ in Berührung, so daß von der positiven Leitung 46 her der Kondensator 58 aufgeladen und dadurch der dritte Transistor 59 angesteuert wird, so daß die Relaiswicklung 60 gespeist und der zugehörige Arbeitskontakt 61 geschlossen wird, und zwar während einer Zeitdauer, die durch die Zeitkonstante des durch Widerstand 57 und Kondensator 58 gebildeten RC-Gliedes bestimmt ist.

Durch Schließen des Arbeitskontaktes 61 wird der zugehörige Stromkreis niederohmig, so daß jetzt ein Strom ausreichender Größe über Umschaltkontakt 7 und Arbeitskontakt 17 aufgrund des noch gedrückten Tastschalters 3 zu der Relaiswicklung 27 fließen kann, so daß dieses Relais anzieht und Umschaltkontakt 32 mit Arbeitskontakt 40 in Berührung kommt, so daß sich das Relais selbst hält.

Die Zeitkonstante des aus Widerstand 55 und Kondensator 54 gebildeten RC-Gliedes ist kürzer bemessen als die Zeit, mit der normalerweise der Tastschalter 3 gedrückt wird. Das bedeutet, daß bei gedrücktem Tastschalter 3 der Umschaltkontakt 44 wieder mit dem Ruhekontakt 43 in Berührung kommt, so daß jetzt ein durchgehender Stromkreis zur dauernden Speisung des sich selbst haltenden Relais mit der Relaiswicklung 27 gebildet ist.

Dieser Schaltzustand bleibt so lange bestehen, bis ein anderer Tastschalter gedrückt wird, so daß sich dann die Vorgänge entsprechend abspielen, also zunächst das sich noch selbst haltende Relais, in diesem Falle das der Relaiswicklung 27 zugeordnete Relais, zum Abfallen gebracht wird durch Unterbrechung der Stromversorgung über Umschaltkontakt 44 und Ruhekontakt 43, wonach das neue Relais über den noch gedrückten Tastschalter bei inzwischen durch den geschlossenen Arbeitskontakt 61 niederohmigen Speisekreis zum Anziehen und dann durch den wieder geschlossenen Weg über Umschaltkontakt 44 und Ruhekontakt 43 bleibend in der Selbsthaltelage gehalten wird.

**Patentansprüche**

1. Schaltungsanordnung zur selektiven Einschaltung verschiedener elektrischer Geräte, insbesondere von Autoradios zu Vorführzwecken, mit jeweils den einzuschaltenden Geräten zugeordneten Tastschaltern und mit Mitteln zur Abschaltung eines eingeschalteten Gerätes bei Betätigung eines einem anderen Gerät zugeordneten Tastschalters, **dadurch gekennzeichnet,**
   - daß die Tastschalter Umschalter (1-4 ...n) mit einem Umschaltkontakt (5-9) und einem Arbeitskontakt (15-19) sind,
   - daß die Umschaltkontakte (5-9) der Tastschalter (1-4 ...n) über einen Widerstand (49) mit einem ersten Pol (47) einer Gleichspannungsquelle und die Arbeitskontakte (15-19) mit einem ersten Anschluß (20-24) von Wicklungen (25-29) von Relais verbunden sind, deren zweiter Anschluß mit einem zweiten Pol (63)der Gleichspannungsquelle verbunden ist,
   - daß die Relais jeweils einen Umschaltkontakt (30-33) und einen Arbeitskontakt (38-41) aufweisen, welcher jeweils mit einem ersten Anschluß (20-24) der Relaiswicklung (25-29) verbunden ist, während jeweils der Umschaltkontakt (30-33) über einen Ruhekontakt (43) und einen Umschaltkontakt (44) eines Umschaltrelais (45) mit dem ersten Pol (47) der Gleichspannungsquelle verbunden ist,
   - daß eine Differenziereinrichtung (54, 55) vorgesehen ist, die eine von dem Strom durch den Widerstand (49) abhängige Spannung differenziert und das Umschaltrelais (45) kurzzeitig betätigt, so daß die Verbindung des ersten Pols (47) der Gleichspannungsquelle zu den mit den Arbeitskontakten (38-41) der Tastschalter (1-4 ...n) verbundenen Wicklungen (25-29) der Relais kurzzeitig unterbrochen wird,
   - daß ein Arbeitskontakt (44′) des Umschaltrelais (45) mit der Wicklung eines abfallverzögerten Halterelais (60) zu dessen Betätigung verbunden ist, das einen Arbeitskontakt (61) aufweist, der die Umschaltkontakte (5-9) der Tastschalter (1-4 ...n) mit dem ersten Pol (47) der Gleichspannungsquelle durch Kurzschluß des Widerstands (49) verbindet,
   - daß der den Tastschaltern (1-4 ...n) vorgeschaltete Widerstand (49) so groß bemessen ist, daß der durch ihn fließende Strom kleiner ist als der Anzugsstrom der Relais (25-29), und
   - daß die Relais (25-29) Arbeitskontakte zum Einschalten der verschiedenen elektrischen Geräte aufweisen.

2. Schaltungsanordnung nach Anspruch 1, **dadurch gekennzeichnet,** daß die Ruhekontakte (10-14) der Tastschalter (1-4 ...n) in Reihe geschaltet sind.

3. Schaltungsanordnung nach Anspruch 1, **dadurch gekennzeichnet,** daß die Ruhekontakte (34-37) der Relais (25-26) in Reihe geschaltet sind.

4. Schaltungsanordnung nach Anspruch 1, **dadurch gekennzeichnet,**
   - daß der Widerstand (49) über wenigstens eine Diode (50) mit dem ersten Pol (47) der Gleichspannungsquelle verbunden ist,
   - daß die Basis-Emitter-Strecke eines ersten Transistors (53) parallel zu der bzw. den Dioden (50) liegt,
   - daß am Kollektor des ersten Transistors (53) ein die Differenziereinrichtung bildendes CR-Glied (54, 55) liegt, das an die Basis eines zweiten Transistors (56) angeschlossen ist, in dessen Emitter-Kollektor-Strecke die Wicklung (45) des Umschaltrelais liegt.

5. Schaltungsanordnung nach Anspruch 1, **dadurch gekennzeichnet,** daß der Arbeitskontakt (44′) des Umschaltrelais mit der Basis eines dritten Transistors (59) verbunden ist, an den ein RC-Glied (57, 58) mit großer Zeitkonstante und in dessen Emitter-Kollektor-Strecke die Wicklung (60) des abfallverzögerten Relais liegt.

**Claims**

1. A circuit arrangement for the selective connection of various electrical appliances, in particular of car radios for demonstration purposes, having push-button switches assigned to the appliances to be connected and having means for disconnecting a connected appliance when a push-button switch assigned to another appliance is actuated,
   **characterised in that**
   - the push-button switches are change-over switches (1-4 ...n) having a change-over contact (5-9) and a make contact (15-19),
   - the change-over contacts (5-9) of the push-button switches (1-4 ...n) are connected via a resistor (49) to a first pole (47) of a constant voltage supply and the

make contacts (15-19) to a first connection (20-24) of windings (25-29) of relays, the second connection of which is connected to a second pole (63) of the constant voltage supply,

- the relays comprise a change-over contact (30-33) and a make contact (38-41) respectively, which is connected respectively with a first connection (20-24) of the relay winding (25-29), whereas the change-over contact (30-33) is connected via a break contact (43) and a change-over contact (44) of a change-over relay (45) with the first pole (47) of the constant voltage supply,

- a differentiating appliance (54, 55) is provided, which differentiates a voltage dependent on the current through the resistor (49) and actuates the change-over relay (45) for a short time, so that the connection of the first pole (47) of the constant voltage supply to the windings (25-29) of the relays connected to the make contacts (38-41) of the push-button switches (1-4 ...n) is interrupted for a short time,

- a make contact (44') of the change-over relay (45) is connected to the winding of a slow-release locking relay (60) for its actuation, which comprises a make contact (61), which connects the change-over contacts (5-9) of the push-button switches (1-4 ...n) with the first pole (47) of the constant voltage supply by short circuit of the resistor (49),

- the resistor (49) connected in front of the push-button switches (1-4 ...n) has such dimensions that the current flowing through it is smaller than the pick-up current of the relays (25-29), and

- the relays (25-29) comprise make contacts for the connection of the various electrical appliances.

2. A circuit arrangement according to Claim 1, **characterised in that** the break contacts (10-14) of the push-button switches (1-4 ...n) are connected in series.

3. A circuit arrangement according to Claim 1, **characterised in that** the break contacts (34-37) of the relays (25-26) are connected in series.

4. A circuit arrangement according to Claim 1, **characterised in that**
   - the resistor (49) is connected via at least one diode (50) to the first pole (47) of the constant voltage supply,

- the base-emitter section of a first transistor (53) is parallel to the diode(s) (50),

- at the collector of the first transistor (53) there is a CR module (54, 55), forming the differentiating device, which is connected to the base of a second transistor (56), in the emitter-collector section of which the winding (45) of the change-over relay is located.

5. A circuit arrangement according to Claim 1, **characterised in that** the make contact (44') of the change-over relay is connected to the base of a third transistor (59), at which an RC module (57, 58) having a large time constant and in the emitter-collector section of which the winding (60) of the slow-release relay lies.

## Revendications

1. Arrangement de circuits pour la connexion sélective de différents appareils électriques, en particulier d'auto-radios pour la démonstration, avec respectivement des touches de commutation adjointes aux appareils à connecter et avec des moyens pour la déconnexion d'un appareil connecté lors de l'actionnement d'une touche de commutation adjointe à un autre appareil,
   caractérisé en ce que
   - les touches de commutation sont des commutateurs (1-4 ...n) avec un contact à permutation (5-9) et un contact de travail (15-19),
   - les contacts à permutation (5-9) des touches de commutation (1-4 ...n) sont reliés par l'intermédiaire d'une résistance (49) à un premier pôle (47) d'une source de courant connu et les contacts de travail (15-19) à une première borne (20-24) de bobines (25-29) de relais dont la seconde borne est reliée à un second pôle (63) de la source de courant continu,
   - les relais présentent respectivement un contact à permutation (30-33) et un contact de travail (38-41) qui est relié respectivement à une première borne (20-24) de la bobine de relais (25-29) tandis que le contact à permutation (30-33) est relié respectivement par l'intermédiaire d'un contact de repos (43) et d'un contact à permutation (44) d'un relais inverseur (45) avec le premier pôle (47) de la source de courant continu,
   - un dispositif dérivateur (54, 55) est prévu qui dérive une tension dépendant de l'intensité à travers la résistance (49) et actionne brièvement le relais inverseur (45), de telle manière que la liaison du premier pôle (47) de la source de courant continu avec les bobines (25-29) des relais reliées aux contacts de travail (38-41) des touches de commutation (1-4 ...n) est interrompue brièvement,

- un contact de travail (44') du relais inverseur (45) est relié à la bobine d'un relais d'arrêt (60) à retombée temporisée pour son actionnement, lequel présente un contact de travail (61) qui relie par court-circuit de la résistance (49) les contacts à permutation (5-9) des touches de commutation (1-4 ...n) au premier pôle (47) de la source de courant continu,

- la résistance (49) connectée en avant des touches de commutation (1-4 ...n) a une valeur telle que le courant la traversant est inférieur au courant d'actionnement des relais (25-29), et

- les relais (25-29) présentent des contacts de travail pour la connexion des différents appareils électriques.

**2.** Arrangement de circuits selon la revendication 1,
caractérisé en ce que les contacts de repos (10-14) des touches de commutation (1-4 ...n) sont connectés en série.

**3.** Arrangement de circuits selon la revendication 1,
caractérisé en ce que les contacts de repos (34-37) des relais (25-26) sont connectés en série.

**4.** Arrangement de circuits selon la revendication 1,
caractérisé en ce que
- la résistance (49) est reliée au premier pôle (47) de la source de courant continu par l'intermédiaire d'au moins une diode (50),
- la liaison base-émetteur d'un premier transistor (53) est parallèle à la diode (50) ou aux diodes,
- une capacité/résistance (54, 55) formant le dispositif dérivateur se trouve au collecteur du premier transistor (53) et est raccordée à la base d'un deuxième transistor (56) dans la liaison émetteur-collecteur duquel se trouve la bobine (45) du relais inverseur.

**5.** Arrangement de circuits selon la revendication 1, caractérisé en ce que le contact de travail (44') du relais inverseur est relié à la base d'un troisième transistor (59) à laquelle se trouve une capacité/résistance (57, 58) à grande constante de temps et dans la liaison émetteur-collecteur duquel se trouve la bobine (60) du relais à retombée temporisée.